# FASCICULE DE BREVET EUROPEEN

(11) **EP 2 880 660 B1**
(45) Date de publication et mention de la délivrance du brevet: **25.04.2018**
(21) Numéro de dépôt: 13826047.6
(22) Date de dépôt: 30.07.2013
(51) Int. Cl.: G21C 13/028, B62D 57/024, E04G 23/02, G21C 17/013, G21C 19/20

(54) **COLMATAGE DE FISSURE DANS UNE PISCINE D'INSTALLATION NUCLÉAIRE UTILISANT UN ROBOT**
ABDICHTUNG EINES RISSES IN EINEM BECKEN EINER KERNTECHNISCHEN ANLAGE MIT HILFE EINES ROBOTERS
SEALING OF A CRACK IN A POOL OF A NUCLEAR FACILITY USING A ROBOT

(30) Priorité: 31.07.2012 FR 1257424
(43) Date de publication de la demande: 10.06.2015
(73) Titulaire: Electricité de France, 75008 Paris (FR)
(72) Inventeur: KUNTZ, Marc, 77250 Veneux-les-Sablons (FR); LAMONTAGNE, Mathieu, Saint-Amable, Quebec J0L 1N0 (CA)
(74) Mandataire: Cabinet Plasseraud
(86) Numéro de dépôt international: PCT/FR2013/051841
(87) Numéro de publication internationale: WO 2014/020280

(56) Documents cités:
- EP-A1- 0 010 034
- DE-U1- 29 822 221
- FR-A1- 2 874 020

## Description

L'invention concerne le colmatage de fissure dans une paroi de piscine dans une installation nucléaire.

De telles fissures peuvent survenir sur les parois de la piscine, et plus particulièrement au niveau des soudures entre des bords de revêtement souvent en acier. Par exemple, les parois intérieures de telles piscines peuvent être recouvertes de voiles en acier inoxydable et les extrémités de ces voiles sont soudées les unes aux autres. Les fissures précitées surviennent souvent au niveau de ces soudures.

On utilise alors un ruban adhésif constitué d'un polymère adhésif (par exemple un élastomère et/ou des silicones ou autres, avec notamment des additifs choisis), comme décrit notamment dans le document FR-2874020, pour recouvrir les soudures au niveau des fissures lorsque ces dernières adviennent.

L'adhésif comporte un revêtement de protection, réalisé par exemple sous la forme d'un film en acier inoxydable, souvent comme les parois de la piscine. Par exemple, le ruban peut être déposé entre deux voiles d'une paroi, le long de la jointure entre les voiles, pour recouvrir une fissure qui s'est formée dans la soudure entre les voiles (suite à l'usure, la corrosion, etc.). Souvent, cette étape est menée alors que la piscine est pleine d'eau qui peut être contaminée par les radiations des assemblages combustibles nucléaires qu'elle contient. Il n'est pas souhaité de faire intervenir un plongeur pour colmater la fissure. A cet effet, un robot pourrait être utilisé pour intervenir afin d'appliquer un ruban adhésif du type précité, sur la fissure, après une phase préalable de localisation et de détection des défauts ou fissures.

On peut prévoir par exemple de disposer d'un robot mobile au fond de la piscine et portant un bras articulé atteignant les fissures en hauteur sur les parois verticales de la piscine. Toutefois, de telles piscines sont profondes, pouvant atteindre typiquement des profondeurs de l'ordre de 14 mètres. Une tolérance angulaire, même faible, est susceptible d'engendrer des erreurs de positionnement non acceptables du ruban collé sur une fissure. On recherche en particulier une tolérance d'erreur de positionnement très faible. En effet, le ruban fait environ 40 mm de largeur et la soudure susceptible de présenter une fissure, à recouvrir, peut atteindre environ 6 mm de largeur. Par ailleurs, on s'impose une tolérance de décalage au niveau de la pose du ruban correspondant au minimum à 15 mm d'adhésif au-delà de la soudure, ce qui laisse une tolérance de 2 mm de décalage autorisé entre le centre du ruban et le centre de la soudure. Ainsi, avec un bras articulé de 14 mètres de long, la tolérance de décalage est de 2 mm. La précision angulaire nécessaire est alors de 0,008 degré, ce qui s'avère difficile, voire impossible, à réaliser en pratique (déjà notamment du fait de la flexibilité mécanique intrinsèque du bras).

Le document EP 0 010 034 propose un exemple de robot apte à se déplacer sur une surface quelconque au moyen d'un corps central et de bras articulés équipés de ventouses. Le corps central est déplacé par des mouvements d'extension/compression des bras articulés. Le document DE 298 22 221 propose un autre exemple de robot apte à se déplacer sur des surfaces verticales par l'animation de systèmes de ventouses reliés à un cadre central.
L'invention vient améliorer la situation.
Elle propose à cet effet un procédé de colmatage de jointure dans une paroi de piscine d'une installation nucléaire (cette jointure présentant ou non une fissure) selon la revendication 1. En particulier, ce procédé met en oeuvre un robot mobile portant un dévideur d'un ruban adhésif revêtu d'un matériau protecteur (par exemple de l'acier inoxydable). Dans le procédé, on prévoit entre autres :
- une commande d'une pluralité de systèmes d'aspiration, le dévideur étant solidaire mécaniquement d'un premier système d'aspiration, et
- une étape de commande de déplacement du premier système par rapport aux autres systèmes de ladite pluralité de systèmes d'aspiration.
Ainsi, la pluralité de systèmes d'aspiration précitée permet de maintenir l'ensemble du robot sur une paroi verticale de la piscine, par exemple par aspiration de ventouses, et le premier système d'aspiration sur lequel est fixé le dévideur peut se déplacer relativement aux autres ventouses pour ajuster la position du dévideur, et de là, du ruban adhésif, par rapport à la fissure, ou plus généralement à la jointure, à colmater. Il devient ainsi possible de dérouler le ruban en continu et sur une grande longueur. Il est alors possible de recouvrir l'ensemble d'une jointure, par exemple au niveau de la soudure entre deux voiles (typiquement sur l'ensemble des 14 mètres précités), cette jointure étant susceptible de présenter des fissures, mais sans se préoccuper de l'existence réelle et de la localisation exacte de ces fissures.
D'ailleurs, la phase de détection/localisation des défauts n'est plus nécessaire. Habituellement, cette détection est menée manuellement (ce qui pose encore un problème de radioprotection de l'operateur). En outre, elle reste imprécise et limitée. Les fissures dites « traversantes », dont l'ouverture est inférieure à 90 µm, ne sont pas détectées. On entend ici par le terme « traversant » le fait que la fissure est d'épaisseur telle qu'une ouverture est formée vers l'extérieur des voiles, lesquels n'assurent plus d'étanchéité.
Cette phase de détection impose plusieurs journées d'intervention dans un programme d'arrêt de tranche qui est déjà habituellement très contraint.
De plus, l'ouverture d'une fissure relève d'un processus de fatigue qui ne dépend pas de la dose locale. On ne peut donc prévoir ni l'emplacement ni le nombre de défauts traversants.
L'invention permet de s'affranchir de ces contraintes en colmatant toutes les soudures accessibles, afin de rendre dorénavant optionnelle la phase de détection-localisation. Les commandes précitées peuvent être opérées à distance à partir d'un poste de commande recevant par exemple des images de caméras montées sur le robot. Selon l'invention, on prévoit un cadre comportant un ou plusieurs systèmes d'aspiration, ainsi qu'une traverse montée mobile dans le cadre et portant le premier système d'aspiration et le dévideur. En outre, la traverse est mobile en translation le long d'une première direction du cadre. Selon l'invention, la traverse porte un bras solidaire mécaniquement du dévideur et ce bras est monté mobile en translation par rapport à la traverse dans au moins une deuxième direction distincte de la première direction. Une telle réalisation permet d'assurer par exemple un déplacement dans un plan parallèle à la paroi à colmater, les deux directions précitées définissant ce plan. Bien entendu, ce bras peut aussi porter un axe vertical pour régler la position de la tête du dévideur, en hauteur, et appliquer ainsi le ruban qu'elle porte contre la jointure à colmater.
Dans une réalisation, on peut prévoir un déport du dévideur à l'extérieur du cadre, ce qui permet une meilleure accessibilité du dévideur dans des régions de coin (régions encombrées par des équipements de filtration, d'éclairage, d'échelle) ou plus généralement à dénivelée, par exemple si les plaques on fait l'objet de soudure à clin. A cet effet, la structure d'un ruban présentant une souplesse adaptée à de telles poses et comportant un élastomère revêtu d'un film d'acier inoxydable, est avantageuse en tant que telle.
Dans une réalisation générale, le premier système d'aspiration peut être monté en rotation par rapport aux autres systèmes d'aspiration, ce qui permet de faire changer le robot de direction de déplacement, ou encore par exemple ajuster finement le trajet d'une jointure sur une paroi.
Dans une réalisation, pour le déplacement du dévideur relativement à une paroi de la piscine, on commande une alternance d'étapes comportant au moins :
- une activation des systèmes d'aspiration avec désactivation du premier système d'aspiration,
- un déplacement du premier système d'aspiration par rapport aux autres systèmes d'aspiration dans une direction donnée,
- une activation du premier système d'aspiration avec désactivation des autres systèmes d'aspiration,
- un déplacement du premier système d'aspiration par rapport aux autres systèmes d'aspiration dans une direction opposée à la direction donnée.

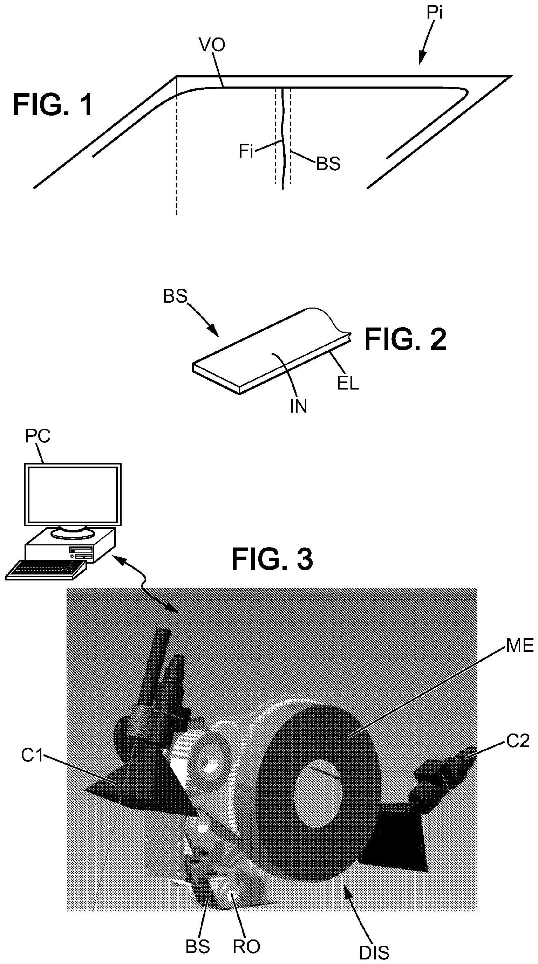

Dans une réalisation, les systèmes d'aspiration comportent des ventouses à reflux de fluide, par exemple commandé à distance. Une telle réalisation permet par exemple de commander un déplacement rapide du dévideur relativement à une paroi de la piscine. Dans une réalisation, le dévideur comportant une tête appuyant le ruban sur la paroi, ladite peut être équipée d'un servomoteur. Une telle réalisation permet par exemple de garantir un contact optimal lors de la pause du ruban. Une variante consiste à enrouler le ruban sur un rouleau segmenté par exemple en au moins deux parties et monté sur deux ressorts en extrémité de la tête du dévideur, comme on le verra plus loin en référence à la figure 3. Le ruban étant souple, il peut épouser alors la forme d'une arête ou d'un dénivelé.
L'invention vise aussi un robot comportant des moyens pour la mise en oeuvre de l'invention présentée ci-dessus, et plus particulièrement un robot mobile selon la revendication 10 pour le colmatage de fissure dans une paroi de piscine à combustible nucléaire. Le robot porte un dévideur de ruban adhésif et comporte entre autres:
- une pluralité de systèmes d'aspiration, le dévideur étant solidaire mécaniquement d'un premier système d'aspiration, et
- des moyens de déplacement du premier système par rapport aux autres systèmes de ladite pluralité de systèmes d'aspiration.
Il convient de noter que le robot peut également évoluer et fonctionner en air pour toute réparation de jointure (entre liners quelconques), permettant ainsi d'éviter non seulement les phases de détection-localisation mais aussi l'assemblage d'échafaudage (par exemple lors d'opération de maintenance de liners métalliques internes d'étanchéité de la paroi béton du bâtiment réacteur par exemple).

L'invention vise aussi une installation comportant un tel robot et des moyens de commande à distance des systèmes d'aspiration et des moyens de motorisation que comporte le robot.

On comprendra que le robot, par son système de déplacement sur les parois verticales d'une piscine grâce aux systèmes d'aspiration précités, permet d'être autonome sur site, bien que piloté à distance par un poste de commande d'une installation au sens de l'invention. Néanmoins, le déplacement du robot peut être commandé très précisément et permet de façon générale d'atteindre une grande précision au niveau de la position de la tête du dévideur par rapport à la fissure, ou plus généralement de la jointure, à colmater. En outre, dans une réalisation avantageuse, pour éviter une dérive de décalage due à de grandes longueurs de pose, le robot peut être équipé d'un système permettant de se réaligner en cours de pose sans abîmer le ruban. Ce réalignement est rendu possible par la précision du positionnement du robot puisque l'incrément des moteurs de positionnement est de préférence de 0,01° en rotation et de 0,25 mm en translation.

D'autres avantages et caractéristiques de l'invention apparaîtront à la lecture d'exemples de réalisation non limitatifs décrits ci-après, et à l'examen des dessins annexés sur lesquels :
- la figure 1 illustre schématiquement une piscine présentant une fissure qui doit être recouverte d'un ruban adhésif de colmatage ;
- la figure 2 représente schématiquement un tel ruban, en coupe ;
- la figure 3 illustre un dévideur de ruban ;
- la figure 4 illustre le dévideur en place dans un socle solidaire de moyens de déplacement du dévideur, ces moyens étant à base d'un système de ventouses ;
- la figure 5A représente plus particulièrement les moyens de déplacement du dévideur utilisant un tel système de ventouses ;
- la figure 5B représente schématiquement les différents degrés de liberté de tels moyens de déplacement ;
- la figure 5C représente les différentes étapes d'un procédé de déplacement utilisant les moyens de déplacement selon la figure 5A ;
- la figure 6 représente une variante de réalisation dans laquelle le dévideur est déporté par rapport à un cadre mécanique portant le système à ventouses.

On se réfère tout d'abord à la figure 1 pour expliquer un contexte possible d'utilisation avantageuse d'un robot au sens de l'invention. Ici, une piscine d'une installation nucléaire, par exemple pour le stockage d'assemblages combustibles, portant la référence PI présente accidentellement une fissure FI. Habituellement, une soudure est opérée entre des parois d'acier de cette piscine, par exemple entre des voiles d'acier inoxydables VO. Ces voiles consistent, dans l'exemple de la figure 1, en des plaques d'acier inoxydable assemblées sur les parois internes de la piscine.

Il est observé en général, avec l'usure des voiles, qu'une fissure, si elle apparaît, part de cette soudure. Habituellement, la fissure est recouverte par un ruban adhésif BS sous forme de bande souvent continue comme représentée sur la figure 2. Le ruban comporte en particulier un polymère adhésif EL (par exemple un élastomère) recouvert d'un film de protection IN par exemple en acier inoxydable. Avantageusement, une telle structure de ruban permet de lui conférer une grande souplesse, notamment pour des poses sur des arêtes ou sur des marches à dénivelé, comme on le verra plus loin.

En référence à la figure 3, le ruban adhésif BS est enroulé autour de rouleaux RO portant le ruban BS, lequel est animé par une cinématique ME à roues dentées et pignons que comporte le dévideur DIS. En particulier, il peut être avantageux de prévoir au moins deux demi-rouleaux RO, montés sur ressorts indépendants, en extrémité de tête du dévideur pour pouvoir appliquer le ruban notamment sur une arête franche ou sur deux surfaces avec une différence de niveau entre elles. En effet, un demi-rouleau étant libre par rapport à l'autre, la tête peut alors absorber des variations de relief lors de la pose du ruban.

En complément ou dans une variante sophistiquée, la tête du dévideur peut être équipée d'un servomoteur appliquant une différence de hauteur de la tête en fonction d'une résistance rencontrée liée à un relief particulier.

Ainsi, on comprendra que la tête du dévideur DIS peut s'insérer dans des anfractuosités de la piscine, par exemple sous des conduits d'acheminement de fluide, ou encore à la base de barreaux d'une échelle, ou autres.

En particulier dans le cadre de la présente invention, le ruban adhésif est particulièrement fin (quelques millimètres seulement) et, par conséquent, souple. Ainsi, il est possible de disposer le ruban dans les conditions précitées (anfractuosités, arête franche, etc.) et ce, sur de grandes distances.

En outre, le robot étant déplaçable sur une paroi verticale notamment de la piscine, et ce avec une position très précise de la tête du dévideur par rapport à un point donné de la paroi, il est possible de poser le ruban sur de grande longueur de soudure. Une telle réalisation permet avantageusement de raccourcir les opérations de réparation des piscines nucléaires en supprimant une phase habituelle de détection de défauts notamment de défauts traversants. En effet, aujourd'hui, la réparation des piscines nucléaires impose une phase de détection préalable. Ce n'est qu'une fois détectés que les défauts sont colmatés. En général, les défauts sont détectés par une méthode de type ACFM pour « Alternative Current Field Measurement » : un courant électrique est injecté à l'aide d'une sonde le long de la soudure, l'analyse du champ magnétique généré traduit alors les dimensions et l'emplacement de défauts traversants (fissures s'étendant de part et d'autre de l'épaisseur d'un voile). La réalisation illustrée sur la figure 3 permet de supprimer cette phase de détection car elle propose d'appliquer un ruban de réparation sur une grande longueur, grâce à la finesse d'épaisseur du ruban et à l'automatisation de la pose de celui-ci et donc de recouvrir sur toute leur longueur les soudures sans se préoccuper de l'existence ou non de défauts traversants. Si toutes les soudures accessibles sont recouvertes par ce matériau, la phase de détection devient ainsi inutile. En réalité, la durée de vie du ruban en service peut simplement régir alors le calendrier de maintenance des parois de piscines. Par exemple, un ordre de grandeur de la durée de vie des rubans peut être d'une dizaine d'années. Il peut alors être prévu une maintenance tous les dix ans.

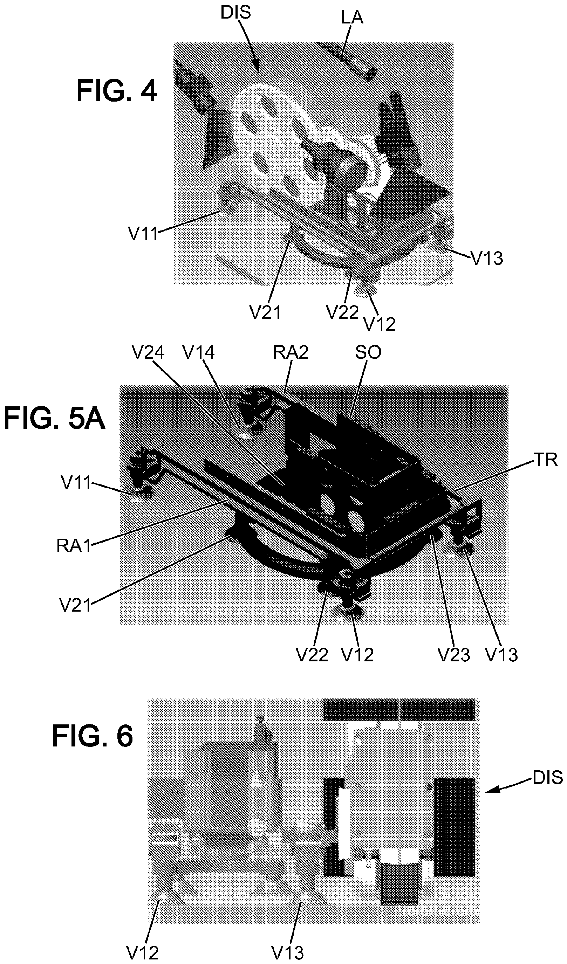

Avantageusement, une caméra avant C1 et une caméra arrière C2 sont montées sur le dévideur DIS pour piloter son déplacement à partir d'un poste de commande distant (référence PC de la figure 3) et approcher la tête du dévideur d'une fissure à colmater, ou plus généralement d'une jointure à recouvrir. En outre, des sources laser (références LA de la figure 4) sont prévues pour affiner de façon optimale sa position par rapport à la jointure.

En référence à la figure 4, le dévideur DIS est monté sur un socle (référence SO de la figure 5A), lequel socle est solidaire mécaniquement d'un système de déplacement à ventouses V11, V12, V13, V21, V22. Ce système de déplacement est plus apparent sur la figure 5A, sur laquelle le socle SO est solidaire mécaniquement d'une traverse TR portant un premier ensemble de ventouses V21, V22, V23, V24. Cette traverse TR peut coulisser en translation entre deux rails RA1 et RA2, lesquels rails portent quant à eux un deuxième ensemble de ventouses V11, V12, V13 et V14. On indique en outre que les ventouses du premier ou du deuxième ensemble ont la propriété d'être pilotées par le poste de commande PC, en ce qu'on peut commander l'activation de leur aspiration d'eau sur une surface pour produire l'effet « ventouse » ou commander leur désactivation pour qu'elles se désengagent de la surface précitée.

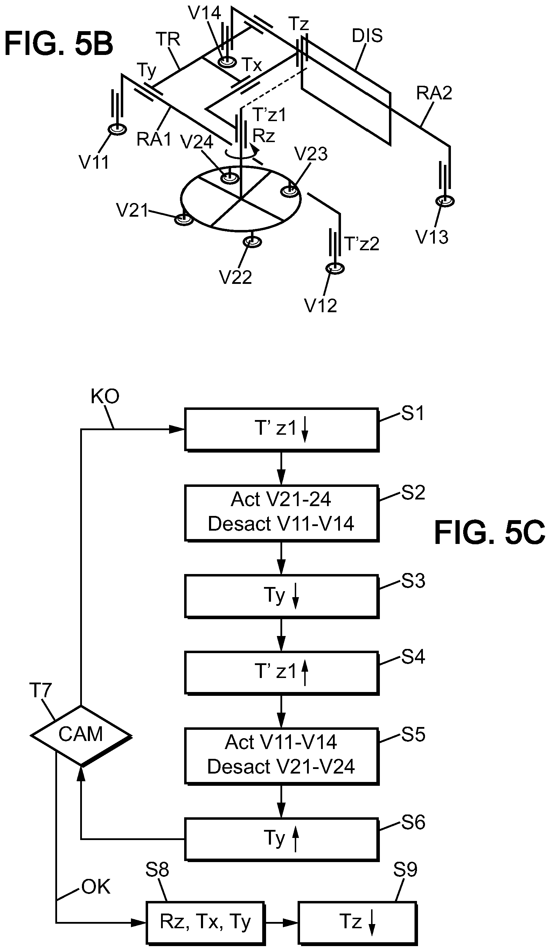

On se réfère alors à la figure 5B pour décrire plus particulièrement les déplacements possibles d'un système de ventouses par rapport à l'autre. Dans l'exemple représenté, le premier système de ventouses V21 à V24 est solidaire d'un axe mobile en translation, en hauteur, Tz1'. Cet axe porte dans l'exemple de réalisation représenté le dévideur DIS (liaison en traits pointillés). Par ailleurs, cet axe Tz1' est solidaire d'une traverse TR susceptible de se déplacer en translation, longitudinalement, selon l'axe Ty. Le dévideur lui-même peut se déplacer, latéralement, en translation selon l'axe Tx et, en hauteur, selon un axe propre Tz. L'axe Tz1' peut en outre se déplacer en rotation RZ pour orienter angulairement le premier système de ventouses par rapport au deuxième système de ventouses. En outre, le deuxième système de ventouses V11 à V14 peut être animé en translation, en hauteur, le long de l'axe Tz'2, dans une réalisation sophistiquée mais aucunement nécessaire.

On se réfère maintenant la figure 5C pour décrire alors le mécanisme de déplacement et d'utilisation d'un tel système représenté sur la figure 5B.

Au cours d'une première étape S1, le premier système de ventouses est abaissé par translation vers le bas effectuée le long de l'axe Tz'1. Simultanément, à l'étape S2, le premier système de ventouses V21 à V24 est activé puis le deuxième système de ventouse V11 à V14 est désactivé. Il s'ensuit que les ventouses V21 à V24 adhèrent à la surface de la paroi (verticale par exemple) de la piscine, tandis que le deuxième système de ventouses V11 à V14 se désengage de cette surface. A l'étape S3, il est commandé une translation selon l'axe Ty, longitudinal, pour « avancer » le système de ventouses V11 à V14 par rapport au premier système de ventouses V21 à V24, et d'ailleurs par rapport aussi à la paroi de la piscine, puisque que le premier système est fixe par rapport à la paroi. Ensuite, à l'étape S4, le mécanisme inverse des étapes S1 et S2 est exécuté : le deuxième système de ventouses V11 à V14 est abaissé à l'étape S4, les ventouses V11 à V14 sont activées alors que le premier système de ventouses V21 à V24 est désactivé. On comprendra alors que, globalement, le dispositif robot s'est avancé de la translation selon l'axe Ty réalisé à l'étape S3 ; il ne reste plus qu'à ramener, à l'étape S6, le premier système de ventouses V21 à V24 dans une position initiale qui offrira la plus grande amplitude possible dans une future translation réalisée à une étape S3 lors d'une itération suivante.

Le déplacement du robot mobile peut être piloté à distance grâce à aux caméras que porte le robot pour s'approcher d'une jointure (test T7). Ainsi, le déplacement du robot se poursuit (flèche KO en sortie du test T7) jusqu'à arriver à une distance appropriée de la jointure (flèche OK en sortie du test T7). Lorsque le robot s'en est approché suffisamment, à l'étape S8, la position angulaire du dévideur DIS est ajustée par rotation Rz, et la position précise du dévideur DIS dans le plan de la paroi de la piscine est ajustée finement par translations selon les axes Tx et Ty, pour placer le dévideur exactement dans l'axe de la jointure. Ensuite, à l'étape S9, une fois la tête du dévideur ajustée au-dessus de la jointure, le dévideur peut être abaissé en translation selon l'axe Tz pour commencer à appliquer le ruban fortement contre la jointure. Ensuite, le robot peut se déplacer (translations Ty) et le dévideur peut être déplacé angulairement Rz et dans le plan Tx, Ty de la paroi de la piscine (et au besoin aussi en hauteur Tz), comme décrit ci-avant dans la succession des étapes S1 à S6.

Par ailleurs, les ventouses des systèmes d'aspiration du robot peuvent être réalisées par exemple sous la forme d'un piston monté sur vérin et apte à faire évacuer de l'eau d'une ou plusieurs cavités successives, ce qui permet une adhésion finement réglable de la ventouse. Comme indiqué ci-dessus, un degré de translation en hauteur Tz sur chaque ventouse peut avantageusement permettre en outre une stabilité du robot dans un plan, en cas de relief marqué de la paroi.

Ainsi, il est possible d'appliquer initialement le robot sur un bord latéral de la piscine (typiquement au voisinage de la surface du liquide qu'elle contient), puis de piloter son déplacement vers la jointure, le robot adhérant à la paroi et se déplaçant par rapport à celle-ci jusqu'à la jointure.

Bien entendu, on a décrit dans ce mode de réalisation un exemple dans lequel le dévideur DIS est solidaire de l'axe Tz1' portant le premier système de ventouses V21 à V24. D'autres réalisations sont envisageables. Par exemple, le dévideur peut ne pas être solidaire de cet axe, mais plutôt d'un axe parallèle à l'axe de translation latéral Tx (représentation conforme à la figure 5B, en faisant abstraction de la liaison en traits pointillés). Une telle réalisation assure un déplacement similaire à celui décrit en référence à la figure 5C, mais permet en revanche de déporter latéralement le dévideur à l'extérieur de la zone délimitée par les rails RA1 et RA2. On a représenté sur la figure 6 cette variante : le dévideur DIS est à l'extérieur du cadre portant les ventouses V11 à V14, ce qui permet d'atteindre directement une fissure sans être entravé par un rail RA1 ou RA2.
Plus généralement, la présente invention ne se limite pas, bien entendu, aux formes de réalisation décrites ci-avant à titre d'exemples ; elle s'étend à d'autres variantes. L'invention est définie dans les revendications. Ainsi, on comprendra que, dans une réalisation très simple, le système général de déplacement du robot peut être à base de deux dispositifs d'aspiration, au minimum. En effet, il suffit qu'un dispositif d'aspiration se déplace par rapport à l'autre en translation pour faire progresser un robot mobile au sens de la présente invention.

## Revendications

1. Procédé de colmatage de jointure (FI) dans une paroi de piscine (PI) d'une installation nucléaire, mettant en oeuvre un robot mobile portant un dévideur (DIS) d'un ruban adhésif (BS), procédé dans lequel on prévoit au moins :
- une commande (PC) d'une pluralité de systèmes d'aspiration (V11-V14 ; V21-V24), le dévideur étant solidaire mécaniquement d'un premier système d'aspiration (V21-V24), un ou plusieurs systèmes d'aspiration (V11-V14) de la pluralité de systèmes d'aspiration étant monté sur un cadre (RA1, RA2), le cadre comprenant une traverse (TR) montée mobile en translation dans le cadre le long d'une première direction (Ty) du cadre et portant le premier système d'aspiration (V21-V24) et le dévideur (DIS), la traverse portant un bras solidaire mécaniquement du dévideur et le bras étant monté mobile en translation par rapport à la traverse (TR) dans au moins une deuxième direction (Tx, Tz) distincte de la première direction, et
- une étape de commande de déplacement (Ty) du premier système (V21-V24) par rapport aux autres systèmes (V11-V14) de ladite pluralité de systèmes d'aspiration.

2. Procédé selon la revendication 1, dans lequel on prévoit un montage du dévideur par rapport au cadre, avec un déport du dévideur à l'extérieur du cadre.

3. Procédé selon l'une des revendications précédentes, dans lequel le premier système d'aspiration (V21-V24) est monté en rotation (Rx) par rapport aux autres systèmes (V11-V14) de ladite pluralité de systèmes d'aspiration.

4. Procédé selon l'une des revendications précédentes, dans lequel, pour un déplacement du dévideur relativement à une paroi de la piscine, on commande une alternance d'étapes comportant au moins :
- une activation (S5) des systèmes d'aspiration avec désactivation du premier système d'aspiration,
- un déplacement (S6) du premier système d'aspiration par rapport aux autres systèmes d'aspiration dans une direction donnée,
- une activation (S2) du premier système d'aspiration avec désactivation des autres systèmes d'aspiration,
- un déplacement (S3) du premier système d'aspiration par rapport aux autres systèmes d'aspiration dans une direction opposée à la direction donnée.

5. Procédé selon l'une des revendications précédentes, dans lequel les systèmes d'aspiration comportent des ventouses à reflux de fluide.

6. Procédé selon l'une des revendications précédentes, dans lequel, le dévideur comportant une tête appuyant le ruban sur la paroi, ladite tête est équipée d'un servomoteur.

7. Procédé selon l'une des revendications précédentes, dans lequel le ruban adhésif est revêtu d'un film de protection.

8. Procédé selon la revendication 7, dans lequel le film de protection est en acier inoxydable.

9. Procédé selon l'une des revendications précédentes, dans lequel la jointure à colmater est une soudure entre voiles (VO) recouvrant une paroi interne de la piscine, ladite soudure étant susceptible de comporter une fissure.

10. Robot mobile pour le colmatage de jointure (FI) dans une paroi de piscine (PI) d'une installation nucléaire, le robot mobile portant un dévideur (DIS) d'un ruban adhésif (BS), et comportant :
- une pluralité de systèmes d'aspiration, le dévideur étant solidaire mécaniquement d'un premier système d'aspiration,
- un cadre (RA1, RA2), le cadre comprenant une traverse (TR) montée mobile en translation dans le cadre le long d'une première direction (Ty) du cadre et portant le premier système d'aspiration (V21-V24) et le dévideur (DIS), la traverse portant un bras solidaire mécaniquement du dévideur et le bras étant monté mobile en translation par rapport à la traverse (TR) dans au moins une deuxième direction (Tx, Tz) distincte de la première direction, un ou plusieurs systèmes d'aspiration (V11-V14) de la pluralité de systèmes d'aspiration étant monté sur le cadre (RA1, RA2), et
- des moyens de déplacement du premier système par rapport aux autres systèmes de ladite pluralité de systèmes d'aspiration.

11. Robot mobile selon la revendication 10, comportant des moyens pour la mise en oeuvre du procédé selon l'une des revendications 1 à 9.

12. Installation comportant un robot mobile selon l'une des revendications 10 et 11, et des moyens de commande à distance (PC) des systèmes d'aspiration et des moyens de déplacement que comporte le robot mobile.

## Patentansprüche

1. Verfahren zum Abdichten von Fugen (FI) in einer Wand eines Beckens (PI) einer kerntechnischen Anlage, das einen mobilen Roboter einsetzt, der einen Abwickler (DIS) eines Klebebandes (BS) trägt, wobei in dem Verfahren mindestens Folgendes vorgesehen wird:
- ein Steuern (PC) mehrerer Absaugsysteme (V11-V14; V21-V24), wobei der Abwickler mechanisch mit einem ersten Absaugsystem (V21-V24) fest verbunden ist, wobei ein oder mehrere Absaugsysteme (V11-V14) der mehreren Absaugsysteme auf einem Rahmen (RA1, RA2) befestigt sind, wobei der Rahmen eine Querstrebe (TR) aufweist, die in dem Rahmen entlang einer ersten Richtung (Ty) des Rahmens translatorisch beweglich befestigt ist und das erste Absaugsystem (V21-V24) und den Abwickler (DIS) trägt, wobei die Querstrebe einen Arm trägt, der mit dem Abwickler mechanisch fest verbunden ist, und wobei der Arm in Bezug auf die Querstrebe (TR) in mindestens eine zweite Richtung (Tx, Tz) translatorisch beweglich befestigt ist, die sich von der ersten Richtung unterscheidet, und
- einen Schritt des Steuerns des Bewegens (Ty) des ersten Systems (V21-V24) in Bezug auf die anderen Systeme (V11-V14) der mehreren Absaugsysteme.

2. Verfahren nach Anspruch 1, wobei ein Montieren des Abwicklers in Bezug auf den Rahmen mit einem Versatz des Abwicklers an der Außenseite des Rahmens vorgesehen wird.

3. Verfahren nach einem der vorhergehenden Ansprüche, wobei das erste Absaugsystem (V21-V24) in Bezug auf die anderen Systeme (V11-V14) der mehreren Absaugsysteme drehbar (Rx) befestigt ist.

4. Verfahren nach einem der vorhergehenden Ansprüche, wobei für ein Bewegen des Abwicklers relativ zu einer Wand des Beckens eine Abfolge von Schritten gesteuert wird, umfassend mindestens:
- ein Aktivieren (S5) der Absaugsysteme mit Deaktivieren des ersten Absaugsystems,
- ein Bewegen (S6) des ersten Absaugsystems in Bezug auf die anderen Absaugsysteme in einer bestimmten Richtung,
- ein Aktivieren (S2) des ersten Absaugsystems mit Deaktivieren der anderen Absaugsysteme,
- ein Bewegen (S3) des ersten Absaugsystems in Bezug auf die anderen Absaugsysteme in einer Richtung, die der bestimmten Richtung entgegengesetzt ist.

5. Verfahren nach einem der vorhergehenden Ansprüche, wobei die Absaugsysteme Saugnäpfe mit Fluidrückfluss aufweisen.

6. Verfahren nach einem der vorhergehenden Ansprüche, wobei der Abwickler einen Kopf aufweist, der das Band auf die Wand drückt, wobei der Kopf mit einem Servomotor ausgestattet ist.

7. Verfahren nach einem der vorhergehenden Ansprüche, wobei das Klebeband mit einem Schutzfilm beschichtet ist.

8. Verfahren nach Anspruch 7, wobei der Schutzfilm aus rostfreiem Stahl ist.

9. Verfahren nach einem der vorhergehenden Ansprüche, wobei die abzudichtende Fuge eine Schweißnaht zwischen Schalen (VO) ist, die eine Innenwand des Beckens abdecken, wobei die Schweißnaht einen Riss aufweisen kann.

10. Mobiler Roboter zum Abdichten von Fugen (FI) in einer Wand eines Beckens (PI) einer kerntechnischen Anlage, wobei der mobile Roboter einen Abwickler (DIS) eines Klebebandes (BS) trägt, und Folgendes umfasst:
- mehrere Absaugsysteme, wobei der Abwickler mit einem ersten Absaugsystem mechanisch fest verbunden ist,
- einen Rahmen (RA1, RA2), wobei der Rahmen eine Querstrebe (TR) aufweist, die in dem Rahmen entlang einer ersten Richtung (Ty) des Rahmens translatorisch beweglich befestigt ist und das erste Absaugsystem (V21-V24) und den Abwickler (DIS) trägt, wobei die Querstrebe einen Arm trägt, der mit dem Abwickler mechanisch fest verbunden ist, und wobei der Arm in Bezug auf die Querstrebe (TR) in mindestens eine zweite Richtung (Tx, Tz) translatorisch beweglich befestigt ist, die sich von der ersten Richtung unterscheidet, wobei ein oder mehrere Absaugsysteme (V11-V14) der mehreren Absaugsysteme auf dem Rahmen (RA1, RA2) befestigt sind, und
- Mittel zum Bewegen des ersten Systems in Bezug auf die anderen Systeme der mehreren Absaugsysteme.

11. Beweglicher Roboter nach Anspruch 10, umfassend Mittel zum Umsetzen des Verfahrens nach einem der Ansprüche 1 bis 9.

12. Anlage, umfassend einen beweglichen Roboter nach einem der Ansprüche 10 und 11 und Mittel zum Fernsteuern (PC) der Absaugsysteme und der Mittel zum Bewegen, die der mobile Roboter aufweist.

## Claims

1. A method for sealing a seam (FI) in a wall of a pool (PI) of a nuclear facility, making use of a mobile robot carrying a dispenser (DIS) for an adhesive tape (BS), the method comprising:
- controlling a plurality of suction systems (V11 - V 14; V21 - V24), the dispenser (DIS) being mechanically integral with a first suction system (V21 - V24), one or more suction systems (V11 - V14) of the plurality of suction systems (V11 - V14; V21 - V24) being mounted in a frame (RA1, RA2), the frame (RA1, RA2) comprising a crosspiece (TR) movably mounted in translation in the frame along a first direction (Ty) of the frame (RA1, RA2), the crosspiece supporting the first suction system (V21 - V24) and the dispenser (DIS), the crosspiece supporting an arm mechanically integral with the dispenser (DIS), the arm being mounted to move in translation relative to the crosspiece (TR) in at least a second direction (Tx, Tz) being different from the first direction (Ty), and
- controlling the movement of the first suction system (V21 - V24) relative to the second suction system (V11 - V14) of said plurality of suction systems.

2. The method according to claim 1, wherein the dispenser is mounted relative to the frame so that the dispenser is placed outside the frame.

3. The method according to one of the preceding claims, wherein the first suction system (V21 - V24) is mounted to rotate relative to the second suction system (V11 - V14) of said plurality of suction systems.

4. The method according to one of the preceding claims, wherein, to move the dispenser relative to a wall of the pool, alternating steps are ordered which comprise at least the following:
- activating (S5) the plurality of suction systems while deactivating the first suction system,
- moving (S6) the first suction system relative to the second suction system in a given direction,
- activating (S2) the first suction system while deactivating the second suction system,
- moving (S3) the first suction system relative to the second suction system in a direction opposite the given direction.

5. The method according to one of the preceding claims, wherein the suction systems comprise suction cups with backflow of fluid.

6. The method according to one of the preceding claims, wherein, the dispenser comprises a head that presses the tape against the wall, and wherein said head is equipped with a servomotor.

7. The method according to one of the preceding claims, wherein the adhesive tape is covered with a protective film.

8. The method according to claim 7, wherein the protective film is made of stainless steel.

9. The method according to one of the preceding claims, wherein the seam to be sealed is a weld between sheets (VO) covering an inner wall of the pool, said weld possibly containing a crack.

10. A mobile robot for sealing a seam (FI) in a wall of a pool (PI) of a nuclear facility, the mobile robot carrying a dispenser of an adhesive tape (BS), and comprising:
- a plurality of suction systems (V11 - V14; V21 - V24), the dispenser (DIS) being mechanically integral with a first suction system (V21 - V24),
- a frame (RA1, RA2), the frame (RA1, RA2) comprising a crosspiece (TR) movably mounted in translation in the frame along a first direction (Ty) of the frame (RA1, RA2) and supporting the first suction system (V21 - V24) and the dispenser (DIS), the crosspiece supporting an arm mechanically integral with the dispenser (DIS), the arm being mounted to move in translation relative to the crosspiece (TR) in at least a second direction (Tx, Tz) being different from the first direction (Ty), one or more suction systems (V11 - V 14) of the plurality of suction systems (V11 - V 14; V21
- V24) being mounted in the frame (RA1, RA2), and
- means for moving the first suction system (V21 - V24) relative to the second suction system (V11 - V 14) of said plurality of suction systems.

11. The mobile robot according to claim 10, comprising means for implementing the method according to one of claims 1 to 9.

12. Facility comprising a mobile robot according to any of claims 10 and 11, and means (PC) for remotely controlling the suction systems and movement means comprised in the robot.
